# EUROPEAN PATENT SPECIFICATION

(11) **EP 3 060 521 B1**
(45) Date of publication and mention of the grant of the patent: **13.09.2017**
(21) Application number: 13821974.6
(22) Date of filing: 24.10.2013
(51) Int. Cl.: C01B 33/02, B01D 21/26, B28D 5/00

(54) **NON-CHEMICAL METHOD FOR RECOVERING SILICON CARBIDE PARTICLES**
NICHTCHEMISCHES VERFAHREN ZUR RÜCKGEWINNUNG VON SILICIUMCARBIDTEILCHEN
PROCÉDÉ NON CHIMIQUE DE RÉCUPÉRATION DE PARTICULES DE CARBURE DE SILICIUM

(43) Date of publication of application: 31.08.2016
(73) Proprietor: Metallkraft AS, 4617 Kristiansand (NO)
(72) Inventor: CHUA, Wee Meng, Singapore 637312 (SG); HINDERSLAND, Jan, N-4617 Kristiansand (NO)
(74) Representative: Viering, Jentschura & Partner mbB Patent- und Rechtsanwälte
(86) International application number: PCT/IB2013/059601
(87) International publication number: WO 2015/059522

(56) References cited:
- EP-A1- 1 561 557
- EP-A2- 0 786 317
- WO-A1-2006/137098
- US-A1- 2009 293 369
- DATABASE CA [Online] CHEMICAL ABSTRACTS SERVICE, COLUMBUS, OHIO, US; 28 June 2012 (2012-06-28), LIU, LAIBAO: "Apparatus for separating waste abrasive slurry generated in silicon wafer cutting", XP002724624, retrieved from STN Database accession no. 157:61640 & CN 202 246 613 U (JIANGSU JIAYU RESOURCES UTILIZATION CO., LTD., PEOP. REP. CHINA) 30 May 2012 (2012-05-30)
- Chih-Wei HSU et al.: "A study on recovery of silicon carbide from silicon sawing waste by hydrocyclone", The 12th International Symposium on East Asian Resources Recycling Technology, November 2-5, 2013, Zhangjiajie, China , XP002724625, Retrieved from the Internet: URL:http://www.cc.ntut.edu.tw/~twcheng/rch _seminar-19614.pdf [retrieved on 2014-05-19]

## Description

### Technical Field

The invention relates to a non-chemical method for recovering silicon carbide (SiC) particles, and in particular, to a non-chemical method and a system for recovering SiC particles that have been used in suspension in a cutting medium for the cutting or sawing of silicon wafers for solar cells and electronic objects often called spent sawing sludge.

### Background

When sawing thin silicon discs, commonly referred to as "wafers", particles of silicon carbide (SiC) of specific grit sizes, such as FEPA classes F500, F600, and F800, are dispersed in an organic liquid, thus forming a suspension, which is used as a cutting medium. The most common dispersing agents are organic glycolic liquids such as polyethylene glycol or di-propylene glycol. Sometimes surfactants that reduce surface tensions are added to the suspension.

The sawing is usually conducted by a wire saw to which a thin, hardened iron wire with brass on the surface, cuts the silicon (Si) block into a series of thin wafers while the particles from the sawing are suspended in the SiC containing suspension. During the sawing process, the suspension becomes contaminated with Si from the Si block, iron (Fe) from the cutting wire, and SiC fines (i.e. fine particles) from the breaking down of abrasive grains.

Typically, the Si wafers are used for the manufacture of electronic or microelectronic devices, or for the manufacture of solar cell panels for the production of electric power. The cleanliness requirement of these Si wafers is typically so high that, in practice, only Si free and Fe free suspensions have been used for the cutting. Furthermore, the requirement for particle size distribution is precisely specified in order to obtain smooth surfaces on the Si wafers. SiC particles for sawing lies within a narrow grain size range, i.e. that there is little or minimal difference between the size of the largest and the smallest grains.

After having been used for some time, the cutting suspension becomes so contaminated with SiC fines, Si and Fe particles that it has to be replaced by a new suspension. In addition, particle size distribution of SiC particles is shifted out of the desired narrow range. There are existing technologies to recover the suspension to a level where it is almost Si free and Fe free, but all of which involves the usage of chemicals. Specifically, acid and/or caustic soda are used to treat the contaminated SiC particles to rid it of the Si and Fe particles. Consequently, a huge amount of chemical waste is generated, which presents another environmental problem.

From a resource, cost and environmental point of view, it is thus desirable to develop non-chemical processes by which SiC fines, Si and Fe particles may be removed and recovered from the suspension. Recycling of SiC particles also means a reduction in the total energy consumption in, for example, manufacturing solar cells processes. Recycling also means less environmental strain with respect to both the production of the SiC and with respect to the handling of chemical wastes due to a lack of non-chemical cleaning processes.

An economically and feasible process implies that it should give high yields of the recovered components for reuse, and that the waste contaminated with Fe, Si and SiC fines should be reused as valuable resources e.g. for use in the production of iron and steel, ferro-alloys or refractory materials. This in turn implies that the recycling process should be designed in a manner such that organic dispersing agents are recovered in high yields and reused for the sawing of Si wafers.

FEPA F500, F600 and F800 microgrits are commonly used in the sawing of Si wafers and it is important that the grains of SiC conform to the standards of narrow particle size distribution and low impurity levels to obtain a good result. The conventional practice is to dilute the suspension of particles and polyethylene glycol or di-propylene glycol with large quantity of water and separate the solid and liquid fractions by physical means. Subsequently, the solid fraction, consisting of SiC particles, SiC fines, Si and Fe particles, are first cleansed by centrifugal separation process, which makes use of the fact that the SiC particles have larger diameters than the contaminants of SiC fines, Fe and Si. This step is capable of achieving the narrow particle size distribution requirement, but is usually unable to meet the low impurity levels. This is especially prevalent with smaller SiC grit sizes such as F800, where the SiC particles are much closer in diameter to the contaminants, hence making it more difficult to separate. Therefore, a chemical treatment step is required, in which caustic soda and acid are used to chemically reduce Si and Fe respectively to the required levels. The use of chemicals in the recycling process not just adds to the cost, but also presents an environmental problem in terms of disposal.

WO2006137098 discloses a process for completely recovering the reusable components of an abrasive slurry used in slicing crystalline materials of silicon, quartz or ceramics when it becomes exhausted and enriched with undesired waste matter.

Therefore, there remains a need to provide for alternative methods for recovering the reusable SiC particles from a spent sawing sludge using non-chemical means.

### Summary

In a first aspect of the disclosure, there is provided a method for recovering silicon carbide (SiC) particles of microgrit size from a mixture of SiC, Si, and Fe particles by physically removing fine grain particles of SiC, Si, and Fe.

The method includes feeding a suspension of SiC, Si, and Fe particles in water to a hydrocyclone system to obtain an underflow stream and an overflow stream. The hydrocyclone system includes one or more hydrocyclones. The suspension fed to the hydrocyclone system is heated to about 45 °C to about 60 °C. Additionally or alternatively, the suspension fed to the hydrocyclone system is treated with ultrasonic frequency of at least 24 kHz.

### Brief Description of the Drawings

In the drawings, like reference characters generally refer to the same parts throughout the different views. The drawings are not necessarily drawn to scale, emphasis instead generally being placed upon illustrating the principles of various embodiments. In the following description, various embodiments of the invention are described with reference to the following drawings.
**Fig. 1** shows a process flow of present method and system.
**Fig. 2A** shows a SEM (2000x magnification) of the recycled SiC particles recovered from present method at ambient temperature with no ultrasonic as a comparative example. In this case, Si content is about 0.68 wt% and Fe content is about 0.98 wt%.
**Fig. 2B** shows a SEM (2000x magnification) of the recycled SiC particles recovered from present method at a temperature range of 45 °C to 60 °C with no ultrasonic. In this case, Si content is about 0.22 wt% and Fe content is about 0.80 wt%.
**Fig. 2C** shows a SEM (2000x magnification) of the recycled SiC particles recovered from present method at ambient temperature with ultrasonic frequency more than 24 kHz. In this case, Si content is about 0.23 wt% and Fe content is about 0.78 wt%.

### Description

The following detailed description refers to the accompanying drawings that show, by way of illustration, specific details and embodiments in which the invention may be practised. These embodiments are described in sufficient detail to enable those skilled in the art to practise the invention. Other embodiments may be utilized and structural, logical, and electrical changes may be made without departing from the scope of the invention. The various embodiments are not necessarily mutually exclusive, as some embodiments can be combined with one or more other embodiments to form new embodiments.

A method and a system for recovering silicon carbide (SiC) particles that have been used in suspension in a cutting medium for the cutting or sawing of silicon wafers for solar cells and electronic objects often called spent sawing sludge are disclosed herein. Advantageously, the method allows recovery of SiC of a narrow grain size range by physically removing (i.e. without involving use of chemicals) from the SiC particles smaller particles such as, but not limited to, iron (Fe), silicon (Si) and SiC fines. The method and system can be applied cost-effectively on an industrial scale and at the same time have minimal negative impacts on the environment.

In present context, recycled particles of SiC within the FEPA (Federation of European Producers of Abrasives) standards of microgrits are obtainable. FEPA is the international standard to which these kinds of materials have to comply. The relevant standard is FEPA standard 42-6B 1984, R 1993. (The same definition is incidentally defined by ISO 6344-3 1968, part 3: "Determination of grain size distribution of microgrits F230 to F1200"). Alternatively, the Japanese Industrial Standards (JIS) may also be applicable here and recycled particles of SiC within the JIS of microgrits are also obtainable.

By ordinary classification, the smallest particles will be present as individual grains that may be separated from the larger particles by a convenient choice of process parameters. With respect to these SiC particles, however, subsequent to the removal and recovery of the dispersing agent from the used suspension, the small particles will adhere to the larger, say F500, F600 or F800 SiC grains that are typically applied for sawing silicon wafers.

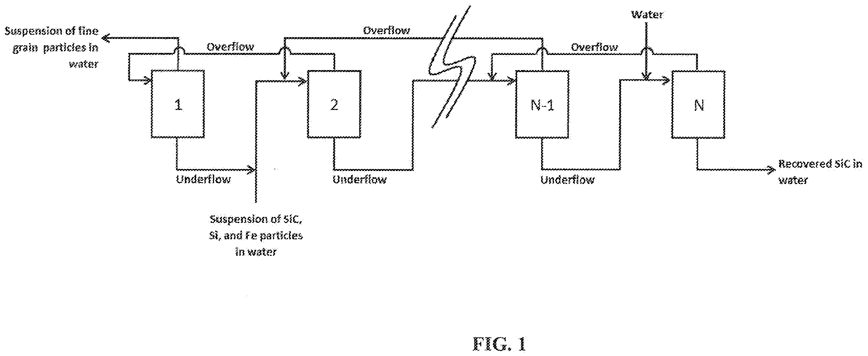

Thus, in a first aspect of the disclosure, there is provided a method for recovering silicon carbide (SiC) particles of microgrit size from a mixture of SiC, Si, and Fe particles by physically removing fine grain particles of SiC, Si, and Fe. An outline process flow of the method and accordingly a system implementing the method is illustrated in **Fig. 1**.

Used slurry, which is essentially made up of the solid particles suspended in the organic liquid medium, is filtered according to existing technology to separate the solid stream from the liquid stream.

The solid phase stream may include essentially the SiC, Si, and Fe particles.

The liquid phase stream may include essentially the organic liquid medium, water, suspended particles and dissolved ions. This liquid stream is separately recovered according to a known technology.

Water is added to the solid phase stream to obtain a suspension of SiC, Si, and Fe particles. In various embodiments, water may be added to form a suspension of a predetermined solid-liquid ratio.

The suspension of SiC, Si, and Fe particles is then fed to a hydrocyclone system to obtain an underflow stream and an overflow stream. Hydrocyclone is a form of wet centrifugal separation of the particles into coarse and fine fractions. The feed enters the hydrocyclone tangentially, afterwhich the heavy or coarse particles start to spiral down the conical bottom section and leaves as an "underflow". On the other hand, the fine fraction leaves via the top section of the hydrocyclone as an "overflow".

The hydrocyclone system includes one or more hydrocyclones. In various embodiments, the hydrocyclone system may include 4 to 8 hydrocyclones. The hydrocyclones may be connected in series. Other forms of connection of the hydrocyclones may also be possible.

In various embodiments, one or more of the hydrocyclones, such as 4 to 8 hydrocyclones, may be connected in series and operate in a counter-current arrangement. In such arrangement, each hydrocyclone may produce an overflow stream and an underflow stream. Each underflow stream of an upstream hydrocyclone may be fed to a downstream hydrocyclone. Each overflow stream of a downstream hydrocyclone may be fed to an upstream hydrocyclone.

It has been found by the inventors that a series of 4 to 8 hydrocyclones operating in a counter-current arrangement is able to achieve optimal separation of fines with high yields of recycled SiC.

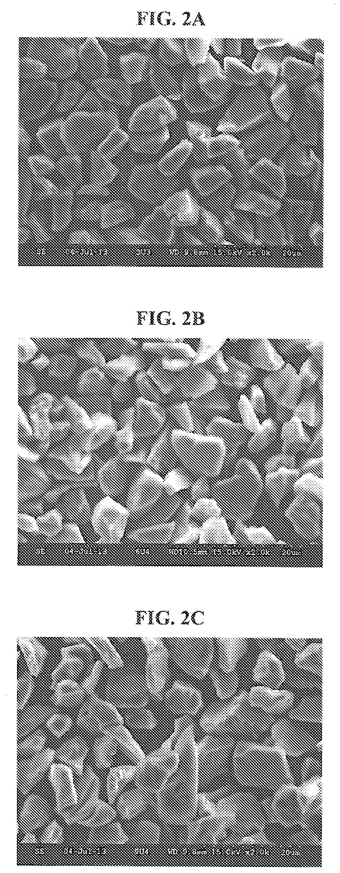

Other than solid-liquid ratio of the slurry, the inventors have surprisingly found that temperature and use of ultrasonic may be useful in aiding the separation and SiC recovery process. For example, the temperature may be set in the range of 45 °C to 60 °C and the ultrasonic frequency set at more than 24 kHz to treat a slurry with JIS2000 grit size. In this case, the impurities can be further reduced by at least 60 % Si and at least 20 % Fe, as shown in **Figs. 2A-****2C.**

**Fig. 2A** shows a SEM (2000x magnification) of the recycled SiC particles recovered from present method at ambient temperature with no ultrasonic as a comparative example. In this case, Si content is about 0.68 wt% and Fe content is about 0.98 wt%.

**Fig. 2B** shows a SEM (2000x magnification) of the recycled SiC particles recovered from present method at a temperature range of 45 °C to 60 °C with no ultrasonic. In this case, Si content is about 0.22 wt% and Fe content is about 0.80 wt%.

**Fig. 2C** shows a SEM (2000x magnification) of the recycled SiC particles recovered from present method at ambient temperature with ultrasonic frequency more than 24 kHz. In this case, Si content is about 0.23 wt% and Fe content is about 0.78 wt%.

Accordingly, in another aspect of the disclosure, there is disclosed a system for recovering silicon carbide (SiC) particles from a mixture of SiC, Si, and Fe particles by physically removing fine grain particles.

The system may include a hydrocyclone system-including one or more hydrocyclones.

In order that the invention may be readily understood and put into practical effect, particular embodiments will now be described by way of the following non-limiting examples.

### Examples

Some users employ silicon carbide suspended in polyethylene glycol as the cutting medium. After usage, the suspension will be saturated with fine impurities that the particle size distribution would have shifted out of the desired narrow range.

By the process of the present invention, it is an intention to recover the silicon carbide particles to a level where it is almost Si free and Fe free, without the usage of chemicals. In doing so, the recovered silicon carbide will comply with the narrow Particle Size Distribution requirement.

### Comparative Example 1: Recovery of FEPA F500 Silicon Carbide particles

The user of this silicon carbide has the following requirement.

| | |
|---|---|
| D10 | < 26.00 µm |
| D50 | 14.00 µm to 16.00 µm |
| D90 | > 8.50 µm |

Test Method: Laser Diffraction using Malvern Mastersizer 2000

The used suspension is filtered according to existing known technology to separate the solid stream from the liquid stream, after which water is added to the solid stream to obtain a suspension of SiC, Si, and Fe particles.

The suspension is then fed into a hydrocyclone system consisting of 4 hydrocyclones connected in series, as shown in **Fig. 1**, without the use of temperature or ultrasonic.

The silicon carbide is recovered in the underflows as it progressed downstream from one hydrocyclone to the next, while the fines are removed in the overflows in a countercurrent flow.

The underflow from the last (4^{th}) hydrocyclone consisted of the recovered silicon carbide particles suspended in water. It has the following impurity levels and particle size distribution:

| | |
|---|---|
| Si | 0.27 wt% |
| Fe | 0.08 wt% |
| D10 | 23.17 µm |
| D50 | 15.49 µm |
| D90 | 10.27 µm |

The recovered FEPA F500 silicon carbide is almost Si free and Fe free, and is comparable (if not cleaner) than most chemical treatment recovery process.

The recovered FEPA F500 silicon carbide also complied to the required Particle Size Distribution.

### Comparative Example 2: Recovery of Japan Industry Standard JIS2000 Silicon Carbide particles

The user of this silicon carbide has the following requirement. It is evident that JIS2000 particles are smaller than F500 particles.

| | |
|---|---|
| D3 | < 17.00 µm |
| D50 | 7.00 µm to 9.00 µm |
| D94 | > 4.50 µm |

### Test Method: Laser Diffraction using Malvern Mastersizer 2000

The used suspension is filtered according to existing known technology to separate the solid stream from the liquid stream, after which water is added to the solid stream to obtain a suspension of SiC, Si, and Fe particles.

The suspension is then fed into a hydrocyclone system consisting of 4 hydrocyclones connected in series, as shown in **Fig. 1**, without the use of temperature or ultrasonic.

The silicon carbide is recovered in the underflows as it progressed downstream from one hydrocyclone to the next, while the fines are removed in the overflows in a countercurrent flow.

The underflow from the last (4^{th}) hydrocyclone consisted of the recovered silicon carbide particles suspended in water. It has the following impurity levels and particle size distribution:

| | |
|---|---|
| Si | 0.68 wt% |
| Fe | 0.98 wt% |
| D3 | 14.34 µm |
| D50 | 8.23 µm |
| D94 | 5.09 µm |

The recovered JIS2000 silicon carbide has relatively higher impurity levels than the recovered FEPA F500 silicon carbide (Example 1). This is due to the smaller particle size of JIS2000, which makes the centrifugal separation of fines more difficult physically.

The recovered JIS2000 silicon carbide also complied to the required Particle Size Distribution.

### Example 3: Recovery of Japan Industry Standard JIS2000 Silicon Carbide particles using higher temperature

The user of this silicon carbide has the following requirement.

| | |
|---|---|
| D3 | < 17.00 µm |
| D50 | 7.00 µm to 9.00 µm |
| D94 | > 4.50 µm |

### Test Method: Laser Diffraction using Malvern Mastersizer 2000

The used suspension is filtered according to existing known technology to separate the solid stream from the liquid stream, after which water is added to the solid stream to obtain a suspension of SiC, Si, and Fe particles.

The suspension is then heated to approximately 45 °C and fed into a hydrocyclone system consisting of 4 hydrocyclones connected in series, as shown in **Fig. 1**. Subsequently, each underflow is heated to approximately 45 °C before feeding into the next hydrocyclone.

The silicon carbide is recovered in the underflows as it progressed downstream from one hydrocyclone to the next, while the fines are removed in the overflows in a countercurrent flow.

The underflow from the last (4^{th}) hydrocyclone consisted of the recovered silicon carbide particles suspended in water. It has the following impurity levels and particle size distribution:

| | |
|---|---|
| Si | 0.22 wt% |
| Fe | 0.80 wt% |
| D3 | 13.48 µm |
| D50 | 7.75 µm |
| D94 | 4.79 µm |

With elevated temperature, the recovered JIS2000 silicon carbide has lower impurity levels.

The recovered JIS2000 silicon carbide also complied to the required Particle Size Distribution.

### Example 4: Recovery of Japan Industry Standard JIS2000 Silicon Carbide particles using

### ultrasonic

The user of this silicon carbide has the following requirement.

| | |
|---|---|
| D3 | < 17.00 µm |
| D50 | 7.00 µm to 9.00 µm |
| D94 | > 4.50 µm |

### Test Method: Laser Diffraction using Malvern Mastersizer 2000

The used suspension is filtered according to existing known technology to separate the solid stream from the liquid stream, after which water is added to the solid stream to obtain a suspension of SiC, Si, and Fe particles.

The suspension is then treated with ultrasonic frequency of 24 kHz and fed into a hydrocyclone system consisting of 4 hydrocyclones connected in series, as shown in **Fig. 1**. Subsequently, each underflow is treated with ultrasonic frequency of 24 kHz before feeding into the next hydrocyclone.

The silicon carbide is recovered in the underflows as it progressed downstream from one hydrocyclone to the next, while the fines are removed in the overflows in a countercurrent flow.

The underflow from the last (4^{th}) hydrocyclone consisted of the recovered silicon carbide particles suspended in water. It has the following impurity levels and particle size distribution:

| | |
|---|---|
| Si | 0.23 wt% |
| Fe | 0.78 wt% |
| D3 | 13.63 µm |
| D50 | 8.00 µm |
| D94 | 5.11 µm |

With ultrasonic treatment, the recovered JIS2000 silicon carbide has lower impurity levels.

The recovered JIS2000 silicon carbide also complied to the required Particle Size Distribution.

By "comprising" it is meant including, but not limited to, whatever follows the word "comprising". Thus, use of the term "comprising" indicates that the listed elements are required or mandatory, but that other elements are optional and may or may not be present.

By "consisting of" is meant including, and limited to, whatever follows the phrase "consisting of". Thus, the phrase "consisting of" indicates that the listed elements are required or mandatory, and that no other elements may be present.

By "about" in relation to a given numerical value, such as for temperature and period of time, it is meant to include numerical values within 10% of the specified value.

## Claims

1. A method for recovering silicon carbide (SiC) particles of microgrit size from a mixture of SiC, Si, and Fe particles by physically removing fine grain particles of SiC, Si, and Fe, the method comprising:
feeding the suspension of SiC, Si, and Fe particles in water to a hydrocyclone system to obtain an underflow stream and an overflow stream, wherein the hydrocyclone system comprises one or more hydrocyclones, wherein the suspension fed to the hydrocyclone system is heated to 45 °C to 60 °C and/or the suspension fed to the hydrocyclone system is treated with ultrasonic frequency of at least 24 kHz.

2. The method of claim 1, wherein the hydrocyclone system comprises more than one hydrocyclone.

3. The method of claim 2, wherein the hydrocyclone system comprises 4 to 8 hydrocyclones.

4. The method of claim 2 or 3, wherein the hydrocyclones are connected in series.

5. The method of claim 4, wherein the hydrocyclones connected in series operate in a counter-current arrangement, wherein each hydrocyclone produces an overflow stream and an underflow stream, wherein each underflow stream of an upstream hydrocyclone is fed to a downstream hydrocyclone, wherein each underflow stream is heated to 45 °C to 60 °C and/or each underflow stream is treated with ultrasonic frequency of at least 24 kHz, and wherein each overflow stream of a downstream hydrocyclone is fed to an upstream hydrocyclone.

## Patentansprüche

1. Ein Verfahren zum Rückgewinnen von Siliziumkarbid (SiC)-Partikeln von Mikrokorn/Microgrit-Größe aus einem Gemisch von SiC-, Si- und Fe-Partikeln durch physikalisches Entfernen von feinkörnigen SiC-, Si- und Fe-Partikeln, wobei das Verfahren aufweist:
Zuführen der Suspension von SiC-, Si- und Fe-Partikeln in Wasser an ein Hydrozyklon-System, um
einen Unterlaufstrom und einen Überlaufstrom zu erhalten, wobei das Hydrozyklon-System einen oder mehrere Hydrozyklone aufweist, wobei die Suspension, die dem Hydrozyklon zugeführt wurde, auf 45 °C bis 60 °C erwärmt wird und/oder die Suspension, die dem Hydrozyklon-System zugeführt wurde, mit einer Ultraschall-Frequenz von mindestens 24 kHz behandelt wird.

2. Das Verfahren gemäß Anspruch 1, wobei das Hydrozyklon-System mehr als einen Hydrozyklon aufweist.

3. Das Verfahren gemäß Anspruch 2, wobei das Hydrozyklon-System 4 bis 8 Hydrozyklone aufweist.

4. Das Verfahren gemäß Anspruch 2 oder 3, wobei die Hydrozyklone in Reihe verbunden sind.

5. Das Verfahren gemäß Anspruch 4, wobei die Hydrozyklone, die in Reihe verbunden sind, in einer Gegenstromanordnung betrieben werden, wobei jeder Hydrozyklon einen Überlaufstrom und einen Unterlaufstrom erzeugt, wobei jeder Unterlaufstrom eines Stromaufwärts-Hydrozyklons einem Stromabwärts-Hydrozyklon zugeführt wird, wobei jeder Unterlaufstrom auf 45 °C bis 60 °C erwärmt wird und/oder jeder Unterlaufstrom mit einer Ultraschallfrequenz von mindestens 24 kHz behandelt wird, und wobei jeder Überlaufstrom eines Stromabwärts-Hydrozyklons einem Stromaufwärts-Hydrozyklon zugeführt wird.

## Revendications

1. Procédé de récupération de particules de carbure de silicium (SiC) de la taille du micrograin d'un mélange de particules de SiC, Si et Fe en éliminant physiquement les particules de grains fins de SiC, Si et Fe, le procédé comprenant :
l'ajout de la suspension de particules de SiC, Si et Fe dans de l'eau à un système d'hydrocyclone pour obtenir un courant de fond et un courant de débordement, le système d'hydrocyclone comprenant un ou plusieurs hydrocyclones, la suspension alimentée au système d'hydrocyclone étant traitée à 45 °C à 60 °C et/ou la suspension alimentée au système d'hydrocyclone étant traitée avec une fréquence ultrasonique d'au moins 24 kHz.

2. Procédé selon la revendication 1, dans lequel le système d'hydrocyclone comprend plus d'un hydrocyclone.

3. Procédé selon la revendication 2, dans lequel le système d'hydrocyclone comprend de 4 à 8 hydrocyclones.

4. Procédé selon la revendication 2 ou 3, dans lequel les hydrocyclones sont reliés en série.

5. Procédé selon la revendication 4, dans lequel les hydrocyclones reliés en série fonctionnent selon un agencement à contre-courant, chaque hydrocyclone produisant un courant de débordement et un courant de fond, chaque courant de fond d'un hydrocyclone en amont étant alimenté vers un hydrocyclone en aval, chaque courant de fond étant chauffé à 45 °C à 60 °C et/ou chaque courant de fond étant traité avec une fréquence ultrasonique d'au moins 24 kHz, et chaque courant de débordement d'un hydrocyclone en aval étant alimenté à un hydrocyclone en amont.
